# EUROPEAN PATENT APPLICATION

(11) **EP 1 780 950 A2**
(43) Date of publication of application: **02.05.2007**
(21) Application number: 06020723.0
(22) Date of filing: 02.10.2006
(51) Int. Cl.: H04L 12/28

(54) **Systems and methods for arbitrating multiple communications**

(30) Priority: 31.10.2005 US 263506
(71) Applicant: Hewlett-Packard Development Company, L.P., Houston, TX 77070 (US)
(72) Inventor: Lada, Henry F. c/o Hewlett-Packard co., Houston, Tx 77070-2607 (US)
(74) Representative: Schoppe, Fritz

(57) **Abstract**

In one embodiment, a method for arbitrating wireless communications includes determining the nature of wireless communications to be transmitted instead of a type of packet to be transmitted (400), determining priorities of the wireless communications relative to the determined nature (402), and controlling transmission of the wireless communications according to the determined priorities (404).

## Description

### BACKGROUND

Modem computing devices are often configured for wireless communications. For example, a notebook computer may be configured to connect to a local area network (LAN) through a wireless connection via an Institute of Electrical and Electronics Engineers (IEEE) 802.11 protocol. In addition, many computing devices are configured to communicate with peripheral devices via wireless communications, for instance using the Bluetooth protocol. For example, one or more user interface devices, such as a keyboard, mouse, or headset, may wirelessly communicate with the computing device.

The frequencies over which such wireless communications are transmitted may coincide for two or more components in a given computer system. For example, the frequency band used by a wireless network card of the computing device may be the same as, or overlap with, one used by one or more wireless user interface devices. In cases in which more than one wireless device is used at the same time, interference may occur. In particular, wireless communications of one component over a particular frequency range may interfere with wireless communications of another component operating over the same or an overlapping frequency range.

When such interference occurs, arbitration is performed to separate the communications in time to avoid signal corruption. Through such arbitration, the order and duration of the transmissions of two or more components are controlled to enable all of the components to transmit their data over their respective frequency ranges. In such a scheme, component transmissions are enabled in an alternating manner so that all or portions of a given frequency range can be shared.

In some arbitration schemes, such as that defined by IEEE 802.15.2 Clause 5, wireless communications are prioritized according to the packet type used in the transmissions. For instance, "data" packets may be assigned a first priority and media packets may be assigned a second priority. The intended reason for assigning different priorities to the transmissions is to ensure that more important data is transmitted more rapidly than less important data. For example, multimedia communications may be given higher priority over data communications to ensure that a multimedia communication, such as streaming video and/or audio, is not interrupted.

Prioritizing according to packet type can be disadvantageous from the user's perspective, however, given that the importance of the wireless communication to the user may not correlate to the type of packets used to transmit the data. For example, if media is transmitted using "data" packets, such as asynchronous connection-oriented (ACL) packets, the communication may not be accorded the priority that is required to ensure an uninterrupted media transmission. Therefore, if a user were wirelessly downloading a large file over the LAN while concurrently listening to music played by the computer on wireless headphones, it would be possible for the audio transmission to the headphones to be interrupted in favor of more quickly downloading the file over the LAN, which file may be less important to the user. To cite another example, if the user were instead writing a document using a wireless keyboard during the wireless download of the file, unacceptable delay between keystroke entry and appearance of the characters on screen could result.

### BRIEF DESCRIPTION OF THE DRAWINGS

The disclosed systems and methods can be better understood with reference to the following drawings. The components in the drawings are not necessarily to scale.

FIG. 1 is a schematic view of an embodiment of a system with which wireless communication arbitration can be performed.

FIG. 2 is a block diagram of an embodiment of a computing device shown in FIG. 1.

FIG. 3 is a block diagram of an embodiment of a wireless communications system shown in FIG. 2.

FIG. 4 is a flow diagram that illustrates a first embodiment of a method arbitrating multiple wireless communications.

FIG. 5 is a flow diagram that illustrates a second embodiment of a method arbitrating multiple wireless communications.

### DETAILED DESCRIPTION

As is described above, prioritizing wireless communications according to packet type can be disadvantageous given that the importance of a wireless communication may not correlate to the type of packets used to transmit the data. As is described in the following, however, advantageous results can be obtained by automatically prioritizing the communications based upon the nature of the communications. In such case, higher-priority communications, such as a multimedia stream or user input, can be given priority over lower-priority communications, such as downloading data and/or files from a network. In other words, communications having lower-latency tolerance can be prioritized over communications having higher-latency tolerance.

Disclosed herein are embodiments of systems and methods for arbitrating multiple wireless communications. Although particular embodiments are disclosed, these embodiments are provided for purposes of example only to facilitate description of the disclosed systems and methods.

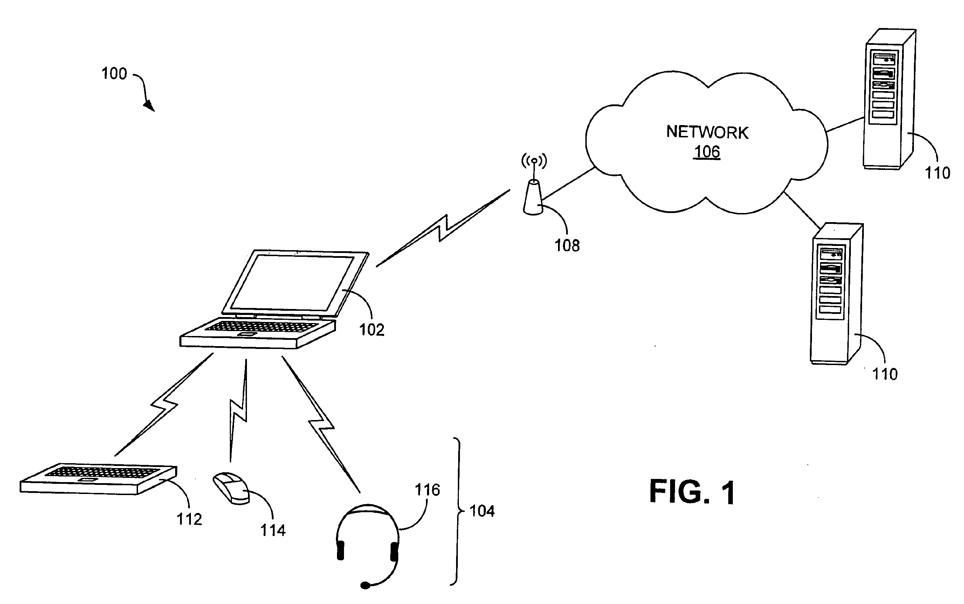

Referring now in more detail to the drawings, in which like numerals indicate corresponding parts throughout the several views, FIG. 1 illustrates an example system 100 in which wireless communication arbitration can be performed. As is indicated in that figure, the system 100 generally comprises a user computing device 102 and one or more wireless user interface devices 104. As is further indicated in FIG. 1, the computing device 102 can communicate with a network 106, such as a wireless local area network (WLAN) wide area network (WAN) (e.g., the Internet) via wireless communications through a wireless access point (WAP) or base station 108 that is connected to the network. Also connected to the network 106 are one or more server computers 110, which comprise data available for download to the computing device 102.

In the embodiment of FIG. 1, the computing device 102 is a notebook, or "laptop," computer. Although the computing device 102 need not comprise a notebook computer, such portable computers are often configured for wireless communications, particularly with local area networks (LANs) that incorporate an access point, such as the WAP 108. Other examples of computing devices that may be used in the system 100 include, but are not limited to, desktop computers and handheld computers, such personal digital assistants (PDAs), tablets, gaming devices, and mobile telephones.

In the embodiment of FIG. 1, the example wireless user interface devices 104 include a wireless keyboard 112, a wireless mouse 114, and a wireless headset 116. When provided, the wireless headset 116 can be configured to receive and/or transmit audio signals from and to the computing device 102. Other example wireless user interface devices may include, but are not limited to, wireless video headsets and wireless stereo headphones.

Communications between the computing device 102 and the wireless user interface devices 104 may be via any available or yet to be created wireless protocol. By way of example, the Bluetooth (IEEE 802.15) protocol may be used to facilitate communications between the computing device 102 and the wireless user interface devices 104. Communications between the computing device 102 and the WAP 108 (i.e., LAN communications) may similarly be via any available or yet to be created wireless protocol. By way of example, the IEEE 802.11b or 802.11g protocol may be used.

In embodiments in which the WAP 108 is used, the WAP may comprise a network communication device, such as digital subscriber line (DSL) or cable modem. Alternatively, a separate network communication device may be used.

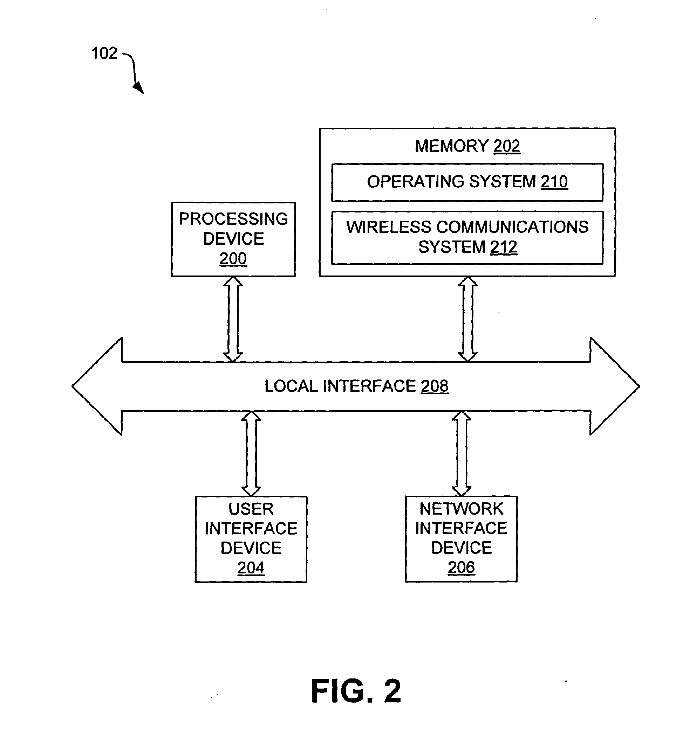

FIG. 2 is a block diagram illustrating an example architecture for the computing device 102 shown in FIG. 1. As is indicated in FIG. 2, the computing device 102 comprises a processing device 200, memory 202, at least one user interface device 204, and at least one network interface device 206. Each of those components is connected to a local interface 208, such as an internal bus. In some embodiments the "wireless communications system" can be considered as comprising the software of the system 212 as well as portions of the user network interface 204 and the network interface device 208.

The processing device 200 is adapted to execute commands stored in memory 202 and can comprise a general-purpose processor such as a microprocessor, one or more application-specific integrated circuits (ASICs), a plurality of suitably-configured digital logic gates, or other components comprised of discrete devices that coordinate the overall operation of the computing device 102. The memory 202 comprises any one or a combination of volatile memory elements (e.g., random access memory (RAM)) and nonvolatile memory elements (e.g., read-only memory (ROM), Flash memory, hard disk, etc.).

The one or more user interface devices 204 comprise the components that enable communication with the user, and more particularly, with the wireless user interface devices 104 (FIG. 1). By way of example, the user interface devices 204 comprise one or more wireless device cards that are configured to wirelessly communicate with the wireless user interface devices 104, for instance, over radio frequency (RF).

The one or more network interface devices 206 facilitate communications between the computing device 102 and the WAP 108 (FIG. 1). These devices 206 can comprise a wireless network card that communicates over a wireless frequency (e.g., RF).

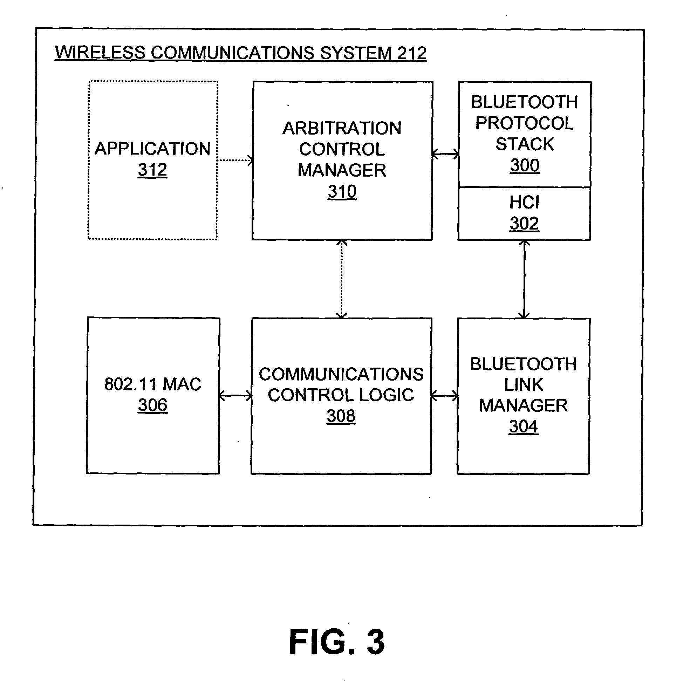

The memory 202 includes various programs including an operating system 210 and the wireless communications system 212 that generally controls wireless communications involving the computing device and, more particularly, arbitrates over interfering wireless communications of two more wireless components. The configuration and operation of the wireless communications system 212 is discussed in greater detail in relation to FIGS. 3 -5 below.

Various programs (logic) have been described herein. These programs can be stored on any computer-readable medium for use by or in connection with any computer-related system or method. In the context of this document, a computer-readable medium is an electronic, magnetic, optical, or other physical device or means that contains or stores a computer program for use by or in connection with a computer-related system or method. These programs can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

Referring to FIG. 3, illustrated is an example embodiment of the wireless communications system 212. In this example, the system 212 is configured for both Bluetooth and IEEE 802.11 communications. As is shown in FIG. 3, the example system 212 includes a Bluetooth system that comprises a Bluetooth protocol stack 300. The Bluetooth protocol stack comprises the high-level software used in Bluetooth-based communications, such as communications between the computing device 102 and the wireless user interface devices 104 (FIG. 1). The Bluetooth protocol stack 300 enables wireless devices to locate each other and establish a connection through which the devices can exchange data and interact with one another through various applications. Associated with the Bluetooth protocol stack 300 is a host command interface (HCI) 302, which is a layer of software and, associated hardware, that acts as an interface between the stack and a Bluetooth link manager 304.

The Bluetooth link manager 304 comprises the low-level software, and associated hardware, that acts as a controller over Bluetooth-based communications of the computing device 102. The link manager 304 carries out link setup, authentication, link configuration and other protocols. The link manager 304 further discovers other remote link managers and communicates with them via a link manager protocol (LMP). The LMP comprises a number of protocol data units (PDUs), which are sent from one device to another.

As is further shown in FIG. 3, the wireless communications system 212 also includes an 802.11 media access controller (MAC) 306 that controls IEEE 802.11 communications of the computing device 102. Generally speaking, the MAC 306 manages and maintains communications between 802.11 stations (e.g., network cards and wireless access points) by coordinating access to a shared radio channel, and utilizes protocols that enhance communications over a wireless medium. The MAC 306 can be considered the "brains" behind 802.11 communications as the MAC uses an 802.11 physical (PHY) layer to perform the tasks of carrier sensing, transmission, and reception of 802.11 frames.

In communication with both the Bluetooth link manager 304 and the 802.11 MAC 306 is communications control logic 308 that is used to control arbitration of wireless communications via Bluetooth and 802.11. By way of example, the communications control logic 308 comprises software and hardware that controls wireless communications in accordance with IEEE 802.115.2 Clause 5. As is known, arbitration according to that standard involves assigning priority to wireless communications in accordance with the packet type used to transmit data of the communications. Given that, as is described above, such an arbitration scheme can be disadvantageous, the wireless communications system 212 includes an arbitration control manager 310 that controls the system such that priority is instead assigned based upon the nature of the communications.

In the embodiment of FIG. 3, the arbitration control manager 310 is associated with the Bluetooth protocol stack 300. With such a configuration, control over communication prioritization can be achieved through commands sent by the arbitration control manager 310 to the communications control logic 308, for instance via the Bluetooth protocol stack 300. The nature of one or more applications 312 can be determined by the arbitration control manager 310, which then provides commands to the Bluetooth protocol stack 300, which are then routed, via the HCI 302, to the Bluetooth link manager 304, and then to the communications control logic 308. The applications 312 can comprise any form of wireless communications. In the context of this description, the "applications" 312 may comprise an actual software application (e.g., a wireless audio player) that controls or is associated with a given wireless communication or may comprise an application of a particular wireless application or a wireless use scenario (e.g., communication of wireless audio). With such operation, the packet type-based arbitration normally performed by the communications control logic 308 can, in essence, be overridden to ensure that lower latency-tolerant communications are prioritized over higher latency-tolerant communications, irrespective of the packet types that are used.

Although the arbitration control manager 310 is shown as communicating with the Bluetooth protocol stack 300, the manager could instead or in addition communicate with an 802.11 device driver associated with the 802.11 MAC to similarly control the communications control logic 308. Furthermore, the arbitration control manager 310 can be integrated, in whole or in part, into one or more of the Bluetooth protocol stack 300, the 802.11 MAC device driver, or the communications control logic 308. In some embodiments, the arbitration control manager software can be distributed within the wireless communications system 212. The actual location of the arbitration control manager 310 is, however, secondary to the functionality it provides.

Example systems having been described above, operation of the systems will now be discussed. In the discussions that follow, flow diagrams are provided. Process flow or blocks in these flow diagrams may represent modules, segments, or portions of code that include one or more executable instructions for implementing specific logical functions in the process. Although particular example process functions are described, alternative implementations are feasible. Moreover, portions may be executed out of order from that shown or discussed, including substantially concurrently or in reverse order, depending on the functionality involved.

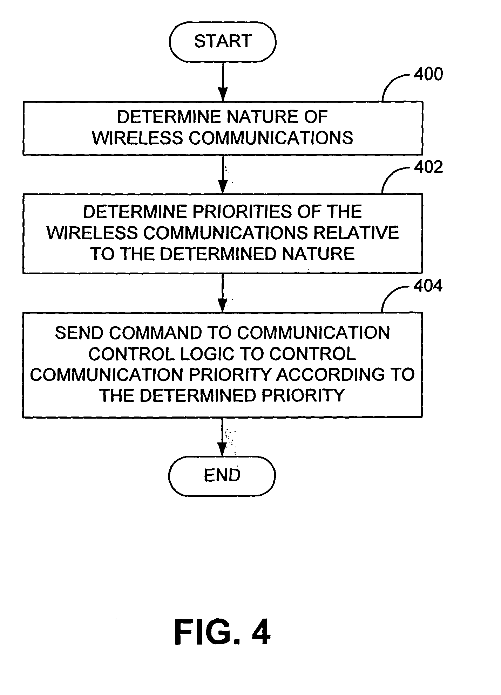

FIG. 4 illustrates an example method embodiment for automatically arbitrating wireless communications that provides an overview of operation of an arbitration control manager 310. Beginning with block 400, the manager 310 determines the nature of one or more wireless communications. In some cases, there may be multiple wireless communications that are occurring and/or are about to occur. In terms of "nature," at issue is the type of the communication in terms of the information that is being transmitted in the communication.

Types of information may comprise "data" being downloaded to the computing device from a given source (e.g., LAN), such as files, Web pages, email messages, and the like. Another type of information includes "media" that is being transmitted to or from the computing device, such as audio and/or video data. A further type of information includes "user inputs", such as keystrokes, mouse movements and clicks, user speech input, and so forth.

In terms of wireless communications, examples include communications between the computing device and a WAP, or between the computing device and one or more user interface devices, such as a wireless keyboard, wireless mouse, wireless audio headset, wireless video headset (e.g., head-worn display), wireless stereo headphones, etc.

As mentioned above, the nature of the wireless communications is determined from the implicated applications. Again, these applications may comprise actual software applications that are used in the wireless communications, or may comprise use scenarios that are recognized by the arbitration control manager 310.

Next, the arbitration control manager 310 determines the priorities of the wireless communications relative to the determined nature, as is indicated in block 402. In some embodiments, the priorities can be assigned according to a default setting that associates a given priority to the various different types of wireless communications. For example, data communications may be assigned a first priority, media communications may be assigned a second priority, and user inputs may be assigned a third priority. These priorities may all be different, or one or more of the priorities may be the same. Moreover, certain kinds of communications within each type may be assigned different priorities. For example, video media communications may be assigned a different priority than audio media communications. In some embodiments, the priorities may be user-selectable, for instance through use of a user interface associated with the arbitration control manager 310.

The priorities may affect one or more of the timing of the transmissions and their duration. For example, a high priority may be associated with longer and/or more frequent transmissions such that high-priority transmissions may use a given frequency range the majority of a given time period during which multiple, overlapping wireless communications take place. For instance, media communications and/or user input communications may dominate over data communications. Notably, the actual timing and duration associated with any given priority level may be selected, either as a default or by the user, to suit the particular use scenario that is at issue.

Once the priorities are determined, the arbitration control manager 310 sends a command to the communications control logic 308 (FIG. 3) to control communication priority according to the priority determined in block 402. Such a command may be routed to the communications control logic 308 via a Bluetooth, IEEE 802.11, or other system, depending upon the particular configuration that is implemented.

When the command is received by the communications control logic 308, the logic arbitrates the wireless communications in accordance with the priorities specified in the command.

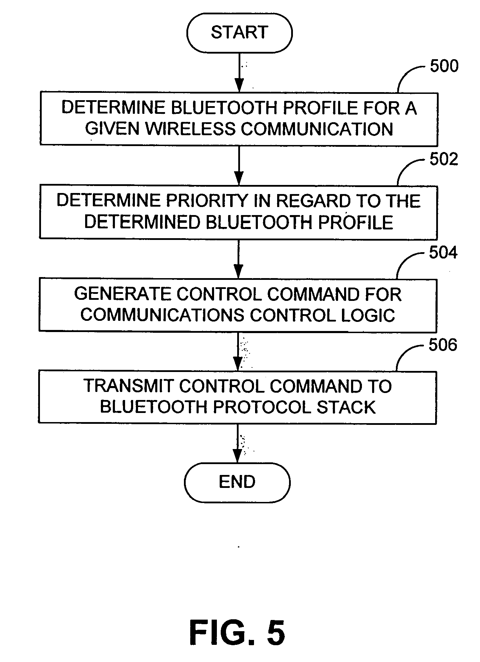

FIG. 5 describes a further method embodiment for automatically arbitrating wireless communications. In this example, arbitration of both Bluetooth and IEEE 802.11 communications is controlled using the Bluetooth system. This improvement is consistent with current collaborative systems in which Bluetooth hardware is used to control transmissions for computing devices that are enabled for both IEEE 802.11 and Bluetooth communications. In this solution, priority is determined through reference to an operating Bluetooth protocol of one or more communications.

Beginning with block 500, the arbitration control manager 310 determines the operating Bluetooth profile for one or more wireless communications. As is known, each Bluetooth communication is assigned such a profile that indicates the nature of the wireless communication. Example profiles include advanced audio distribution profile (A2DP) used for audio data, and human interface device (HID) profile used for user inputs. In some embodiments, identification of one of those profiles equates to identification of a high-priority communication, or low latency tolerance communication, that will take priority over a data communication that is transmitted via IEEE 802.11. Next, the arbitration control manager 310 makes a priority determination in regard to the determined profile(s), as is indicated in block 502. This priority determination can be made with reference to a lookup table that links a given priority to each of various Bluetooth profiles. As is described above, those priorities can, in some embodiments, be selected by the user using a user interface associated with the arbitration control manager 310.

At this point, the manager 310 generates a control command for the communications control logic 308 (FIG. 3), as is indicated in block 504. The control command causes the Link Manager to control the communications control logic 308 as is necessary to effect the desired priority. If the communications control logic 308 uses 802.15.2 Clause 5, the communications control logic is programmed for control by the link manager 304.

Once the control command is generated, the arbitration control manager 310 transmits the command to the Bluetooth stack protocol 300, as is indicated in block 506. At this point, the Bluetooth stack protocol 300 transmits the command, via the HCl 302, to its link manager 304, which then transmits the command to the communications control logic 308. The communications control logic 308 implements the command to arbitrate all wireless communications, whether they be Bluetooth, IEEE 802.11, or otherwise, so that the intended priorities are honored. The communications control logic 308 performs this arbitration in similar manner to that of known systems with the exception that priority is applied relative to the determined Bluetooth profile(s) instead of packet types.

In the case of controlling priority via the 802.11 side of the system, prioritization can be based on, for example, the IEEE 802.11e standard, which prioritizes WLAN traffic based on data type (e.g., voice, video, best effort, low priority data, etc.) between multiple WLAN devices in an area around an access point. The MAC of each 802.11 device is cognizant of the data type information and could use it in a similar manner to the Bluetooth profile method described above. In particular, the 802.11 MAC could control the communications control logic based on the data type provided by the 802.11e standard. Alternatively one can also implement a solution that uses both the 802.11e information and the Bluetooth profile information, where an arbiter (preferably in the communications control logic) decides which wireless device is assigned an upcoming time slot to transmit or receive.

In view of the above, arbitration of multiple wireless communications can be achieved in relation to the nature of the communication and its importance to the user, as opposed to the types of packets that are used to transmit data of the communications. Notably, this form of arbitration can be used to arbitrate between communications using different protocols, such as Bluetooth and IEEE 802.11, as well as between communications transmitted using the same protocol. For example, the disclosed arbitration can be used to establish priorities as between two different Bluetooth communications.

## Claims

1. A method for arbitrating wireless communications, the method comprising:
determining the nature of wireless communications to be transmitted instead of a type of packet to be transmitted (400);
determining priorities of the wireless communications relative to the determined nature (402); and
controlling transmission of the wireless communications according to the determined priorities (404).

2. The method of claim 1, wherein determining the nature of wireless communications comprises determining the type of information being transmitted in at least one of the wireless communications.

3. The method of claim 1, wherein determining the nature of wireless communications comprises determining a Bluetooth profile associated with at least one of the wireless communications (500).

4. The method of claim 1, wherein determining priorities of the wireless communications comprises assigning higher priorities to media and user input transmissions as compared to data transmissions.

5. The method of claim 1, wherein controlling transmission comprises sending a command to communications control logic that arbitrates wireless communications via a Bluetooth link manager.

6. The method of claim 1, wherein the wireless communications include IEEE 802.11 communications and Bluetooth communications.

7. The method of claim 1, wherein controlling transmission comprises specifying the priority of the at least one wireless communication such that wireless communications are arbitrated in accordance with an assigned priority instead of in accordance with packet types used to transmit the wireless communications.

8. A system for arbitrating wireless communications, the system comprising:
means for determining the type of information being transmitted to be transmitted instead of a type of packet to be transmitted;
means for determining priorities of the wireless communications relative to the determined nature (402); and
means for controlling transmission of the wireless communications according to the determined priorities (404).

9. The system of claim 8, wherein the means for determining the nature of wireless communications comprise means for determining a Bluetooth profile associated with at least one of the wireless communications (500).

10. The system of claim 8, wherein the means for controlling comprise means for specifying the priority of the at least one wireless communication such that wireless communications are arbitrated in accordance with an assigned priority instead of in accordance with packet types used to transmit the wireless communications.
